# EUROPEAN PATENT SPECIFICATION

(11) **EP 3 648 853 B1**
(45) Date of publication and mention of the grant of the patent: **10.07.2024**
(21) Application number: 18749596.5
(22) Date of filing: 05.07.2018
(51) Int. Cl.: A63C 11/00

(54) **SKI MOUNTABLE AND FOLDABLE CHILD TRANSPORTATION DEVICE**
KINDERTRANSPORTGERÄT ZUM ZUSAMMENKLAPPEN UND AUF SKIER ANBRINGEN
ENGIN DE TRANSPORT POUR ENFANT PLIABLE ET FIXABLE SUR DES SKIS

(30) Priority: 07.07.2017 NO 20171132
(43) Date of publication of application: 13.05.2020
(73) Proprietor: Utsudr AS, 0755 Oslo (NO)
(72) Inventor: KLEPPE, Geir Ståle, NO-0755 Oslo (NO)
(74) Representative: Zacco Norway AS
(86) International application number: PCT/NO2018/050179
(87) International publication number: WO 2019/009737

(56) References cited:
- EP-A1- 0 046 240
- CA-A- 749 733
- FR-A- 1 083 261
- US-A1- 2017 137 049

## Description

### TECHNICAL FIELD

The present invention relates to a child transportation device that can be mounted on a pair of skis, such as e.g. cross-country skis with toe bindings, telemark skis or alpine skis. The child transportation device can further be folded or collapsed for easy transportation in a back pack when the child is using the skis for skiing.

### BACKGROUND

A known problem for families going skiing with small children, is that much more time is spent getting ready for the trip, than actually skiing. The children often need to be pulled or carried part of the trip. To carry the child while skiing, involves risk. Equipment is available for transport, but usually spacious and cumbersome to bring. This creates a barrier to planning ski-trips with small children.

Sledges and toboggans have been known for centuries. Most of the time the runners have been designed specifically for the purpose. Sledges are made for leisure and transportation. A special type of sledge is the kicksledge that has a chair on top of the runners, and can be used to transport people.

Norwegian patent NO37697 is a foldable seat mountable to a pair of skies, resulting in a type of kicksledge. The type of chair provided will be unstable for a small child.

A more versatile sledge is shown in Patent publication SU1311987, disclosing a sledge with a pair of runners and a hinged frame, to carry a child when in a working condition, and to support load for transportation when in a flattened position .

Canadian patent CA2034837 A describes an infant toboggan or sled made of an infant car seat fastened to two skis. However, this type of sled is not foldable, and it cannot easily be mounted and detached to/from the child's own skis.

EP0149953 (B1) describes a steerable sledge of the luge type with a foldable frame mountable on skis with ski bindings. The sledge is made for downhill sledging and due to the seat height it may become unsteady for small children that are not capable of actively steering and keeping the balance. Further, it spacious and cumbersome to bring along, and it does not easily fold into a normal day-trip pack.

Norwegian patent NO103395 discloses a chair mountable on a pair of skis. The chair is not made for being carried on the back.

Patent GB 2191155 A discloses a ski chair mountable on ski bindings. Due to suspension units in the legs, the chair is steerable. The ski chair is designed for downhill sledging, and not to carry children.

Patent publication DD270045 A1 discloses a package and rescue device to be mounted on a pair of skies. The seat is located from the front of the binding and backwards, which creates certain problems with stability when the skis are short.

US 2017/137049 A1 relates to a ski mountable upright transport device comprising several ski clamp attachments to be mounted on alpine ski bindings.

FR 2573660 A1 discloses a device that may be used to redesign a pair of alpine skis into a sled. FR 1083261 relates to a device for transforming a pair of cross country skis and ski poles to a sledge my means of a curved blade that serves as a stool and a transverse connection between the skis. The blade may be fixed to the bindings of the skis, while the ski poles are fixed between the blade and the tips of the skis. FR 1083261 more precisely discloses a ski mountable and foldable child transportation device comprising two ski binding fixing elements, configured for being fixed to ski bindings arranged on respective two skis, and a seat, wherein the two ski binding fixing elements, and the seat are interconnected, wherein the seat comprises two support elements in front of the two ski binding fixing elements, and the support elements are configured to be arranged between the seat and the respective two skies and to support the seat. US 20170137049 relates to a chair that may be fixed to skis comprising alpine bindings. CA749733 relates to a collapsible chair.

The publications NO 155921B, CA 2808077 A1, US 2009/283978 A1, FR 2741579 A1, US 4245849 A, US 2209830 A, FR 2652792 A1, CN 105539562 A, SE 0901208 A1, FR 2989593 A1, FR 2770142 A1 and FR 2260955 A1 all comprises devices or parts of ski or sled devices.

More recently, chairs for Sit-skiers with leg impairments have been developed. They can be mounted to skis provided with double bindings on each ski. Again, these chairs are made for skiing and not carrying a small child.

A common problem with the prior art described above, is that they do not propose a chair for children that can be mounted on the child's own skis, and that can fit in a day-trip backpack. One specific problem with the design of the chairs according to prior art, is that if they are mounted on short skis typically used by children, the center of mass will be located at the rear part of the skis, which tends to make the skis unstable.

In addition, a small child, tired after a long walk, will need a more reclined seat back than most of the solutions disclosed by prior art. If the seat backs of the existing solutions should be modified to become more comfortable, the center of mass would move even further back, and the problem described above would worsen.

### SHORT SUMMARY

A goal with the present invention is to overcome the problems of prior art, and to disclose a stable and comfortable foldable transport device for children that can be mounted on cross country skis to improve the situation for families skiing with small children, wherein a foldable chair contained in a normal day-trip backpack that can be mounted on the child's skis when the child no longer wants to continue on its own.

The invention solving the above mentioned problems is a ski mountable and foldable child transportation device comprising two ski binding fixing elements, configured for being fixed to ski bindings arranged on respective two skis, a seat back, and a seat wherein the two ski binding fixing elements , the seat back and the seat are interconnected, and the seat back and the seat are foldable relative each other, wherein the seat comprises two support elements in front of the two ski binding fixing elements, and the support elements are configured to be arranged between the seat and the respective two skies 100a, 100b in front of the binding and before the start of the shovel and to support the seat.

The transport device is easy to bring, and is "out of sight, out of mind" when not in use. Its primary function is to transport the child, but it also comes in handy as a seat while resting, and as a toy for playing in the snow.

The transport device can be mounted into standard cross-country ski bindings, such as NNN Rottefella (TM) typically mounted on children skis, but variants can be made to fit into other binding types.

In an embodiment the transport device can be adjustable for different ski-lengths, typically between 100 cm and 140 cm, which is usually the ski lengths used by children who need this type of transport device. However, longer skis can also be accommodated.

### BRIEF DESCRIPTION OF THE DRAWINGS

Figs. 1, 2, 3 and 4 illustrates an embodiment of the invention in various perspective views.
Fig. 5 and 6a illustrate alternative embodiments of the line system used for pulling and tensioning the transport device seen from above.
Fig. 6 b illustrates a lace locking device that may be used in some of the embodiments.

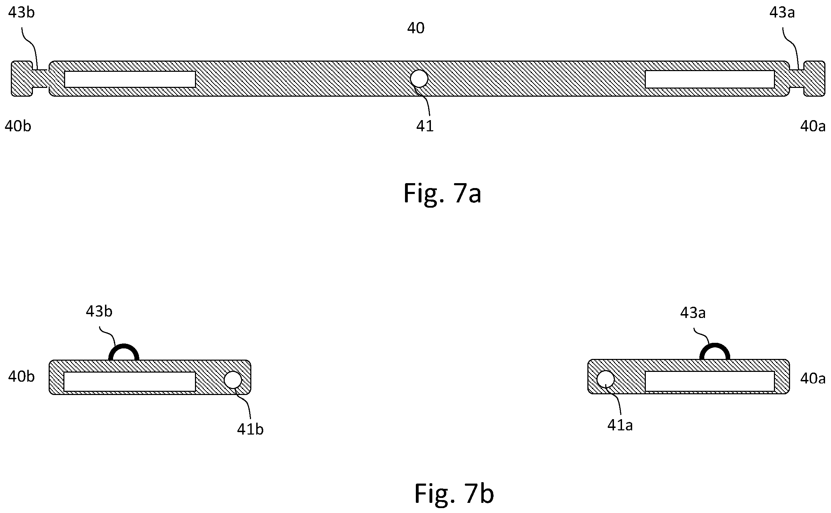

Fig. 7a and 7b, illustrates in a section view ski-tip members that may be used in some of the embodiments.

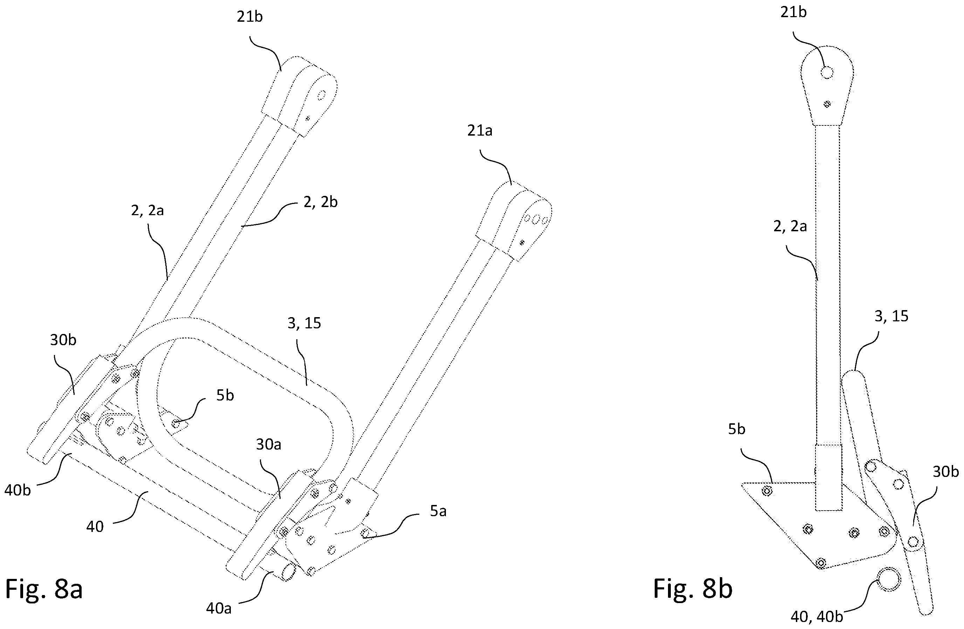

Fig. 8a and 8b illustrate in a perspective view and a side view, respectively, an embodiment of the invention, where the ski mountable and foldable child transportation device is in a folded position. The embodiment illustrated is similar to the embodiment s shown in Fig. 1 to 4, however, for illustration purposes, the fabric, or cover of the seat, seatback, footrest, the tensioning device, ropes bands etc. have been left out.

### EMBODIMENTS OF THE INVENTION

In the following description, various examples and embodiments of the invention are set forth in order to provide the skilled person with a more thorough understanding of the invention. The specific details described in the context of the various embodiments and with reference to the attached drawings are not intended to be construed as limitations. Rather, the scope of the invention is defined in the appended claims.

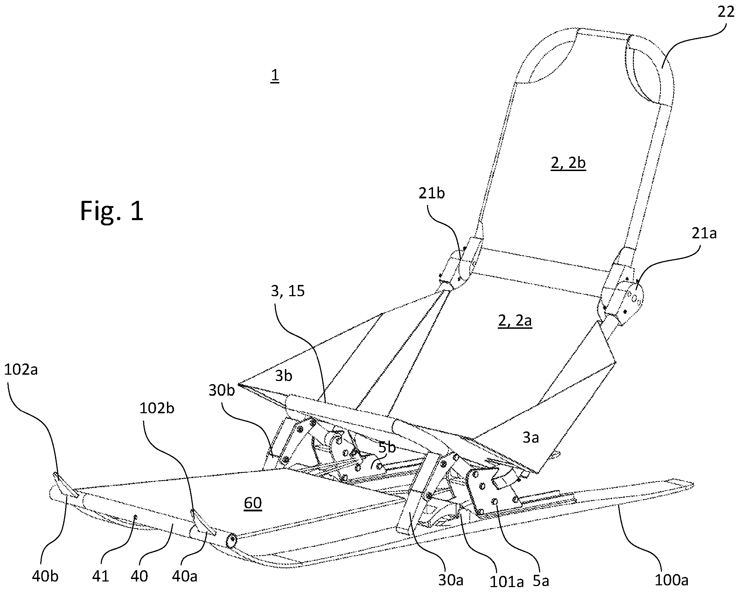

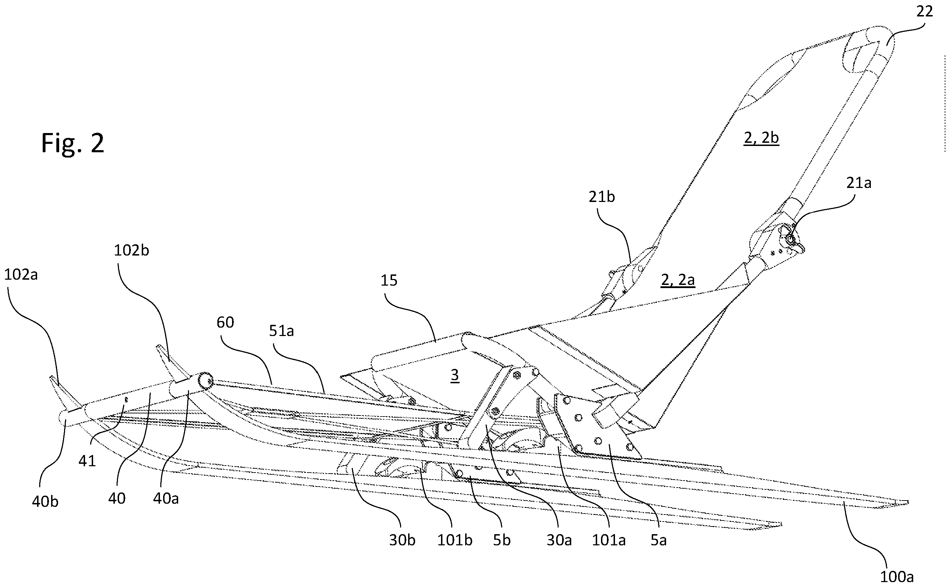

In a generic embodiment the invention is a ski mountable and foldable child transportation device 1 comprising two ski binding fixing elements 5a, 5b, configured for being fixed and released from ski bindings 101a, 101b arranged on respective two skis 100a, 100b, and a seat back 2 and a seat 3 interconnected with each other and the two ski binding fixing elements 5a, 5b, wherein the seat 3 comprises two support elements 30a, 30b in front of the two ski binding fixing elements 5a, 5b, and wherein the support elements 30a, 30b are configured to be arranged between the seat 3 and the respective two skies 100a, 100b, as illustrated e.g. in Fig. 1 to 4. The seat back 2 and the seat 3 are foldable relative each other.

The ski mountable and foldable child transportation device 1 can be mounted to a pair of skis 100a, 100b with ski bindings 101a, 101b. The ski bindings illustrated are of the Rottefella NNN type typically mounted on children's cross-country skis, but variants can be made to fit into other binding types within the scope of the invention. The actual type of ski and skibinding, as well as the ski binding fixing element adapted to be fixed to the ski binding is of less importance. In case the binding is a toe binding of the NNN type, the ski binding fixing element may have similar fixing properties as a toe portion of a cross country shoe. In case the ski binding is a free heel binding of the telemark type or other bindings of the cable type, the ski binding fixing element may be similar to sole of a telemark boot. Further, if the ski binding is an alpine binding with, or without free heel, such as alpine touring, the ski binding fixing element may have similar fixing properties as an alpine boot sole, where both toe and heel parts of the sole are fixed in the ski binding. The ski binding fixing element is preferably in a stiff material.

The ski mountable and foldable child transportation device 1 comprises two ski binding fixing elements 5a, 5b, configured for being fixed and released from the ski bindings 101a, 101b. The ski binding fixing elements 5a, 5b are fixed and released from the ski bindings 101a, 101b by opening and closing the release mechanism on the ski binding the same way as it is done when a normal ski shoe is fixed or released from the binding. The lower part of the ski binding fixing elements 5a, 5b, facing the ski-bindings 101a, 101b, are therefore similar in design to the front part of a sole of a ski shoe made for the ski binding. In this case, the ski binding fixing elements 5a, 5b has a transversal pin that is fixed to the ski binding 101a, 101b when the handle of the ski binding 101a, 101b is moved into a locked position.

The ski binding fixing elements 5a, 5b provides the basic foundation for the ski mountable and foldable child transportation device 1 on the skis 100a, 100b.

The transportation device is designed with the lowest possible centre of gravity for good balance and handling. This is achieved by minimum, but sufficient clearance to the ground. To achieve a good position of the centre of gravity in the longitudinal direction, the support elements 30a, 30b are introduced between the seat 3 and the ski 100a, 100b in front of the ski bindings 101a, 101b. This also prevents the bindings to be overloaded due to excessive forward tilting of the seat 3 in the binding 101a, 101b.

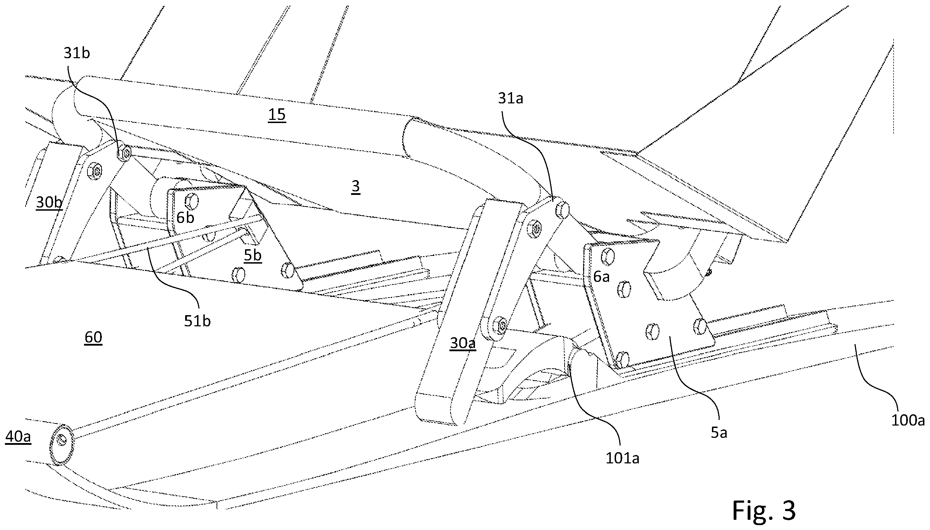

The support elements can be in a folded position, where they are essentially parallel to the seat 3, and an extended position where they are providing a support between the seat 3 and the skis 100a, 100b, as illustrated in Fig. 3. When a child is sitting in the chair, the child's weight will be distributed to the skis 100a, 100b via the ski binding fixing elements 5a, 5b at the back of the seat 2 and the support elements 30a, 30b in the front of the seat 2 .

In an embodiment, that can be related to any of the embodiments above, the transportation device 1 comprises support element locking means configured to lock the support elements 30a, 30b relative the seat 3. In a related embodiment the seat locking means are one or more releasable pins through the seat frame and the support elements 30a, 30b near the support element pivots 31a, 31b. In an alternative embodiment, the support element locking means is a self-locking ratcheting mechanism co-axial with the support element pivots 31a, 31b, or a similar self-locking mechanism.

It is an objective of the invention that the transportation device 1 should be able to carry in a day trip backpack. To solve this problem, the seat 3 is in an embodiment related to the generic embodiment above, foldable relative the seat back 2 as illustrated in Fig. 1. The pivot can be realized e.g. as a hinge.

In an embodiment related to any of the embodiments above, the two support elements 30a, 30b are foldable relative the seat 3. The support elements 30a, 30b can be individually foldable, or interconnected so that they, when one of the support elements 30a, 30b is folded or unfolded, the other will automatically be forced to the same position.

In an embodiment according to any of the embodiments above, the seat back 2 comprises a first and a second sections 2a, 2b, interconnected by a pivot 21a, 21b, wherein the second section 2b is foldable over the first section 2a about the pivot 21a, 21b. The upper part 2b can pivot about the hinges 21a, 21b to collapse the ski mountable and foldable child transportation device 1 to a format suitable for transportation, when it is not mounted on the skis. The pivot also has the advantage that the first and second sections 2a, 2b in an embodiment can be fixed relative each other with different angles. E.g, the second or upper section 2b can be tilted up a bit to give the child a better support for the head while sitting awake, while it may be adjusted in-line with the first or lower section if the child is sleeping.

The pivot or hinges 21a, 21b may comprise locking means configured to lock the upper section 2b relative the lower section 2a when the ski mountable and foldable child transportation device 1 is in use. In an embodiment the locking means are releasable pins through hinges, eccentric to the pivot axis.

In an alternative embodiment, the seat back 2 is telescopic and comprises a first and a second section, wherein the first and second sections are telescopic relative to each other. In this case, the pivot is not used.

In an embodiment that can be combined with any of the embodiments above, the seat back 2 comprises a handle 22 in its upper end. This is advantageous for guiding and control in more difficult environment, such as downhill with poor tracks, or steeper downhill with higher speed. The height of the handles are designed to give comfortable skiing position for an adult, and at the same time providing good control of the ski chair.

The seat back 2 and the seat 3 are foldable relative each other, as described above.

The seat back 2, the seat 3 and the ski binding fixing elements 5a, 5b are interconnected. This means that they can be directly or indirectly connected relative each other. Indirect interconnection between the seat 3 and the seat back 2 implies that they are each connected to one or more intermediate elements, such as e.g. the ski binding fixing elements 5a, 5b. Direct connection means that they are directly connected to each other without any intermediate element. The term "interconnected" covers both direct and indirect connections. As long as the interconnection allows the seat back 2 and the seat 3 to be foldable relative each other and fixed to the skis 100a, 100b via the two ski binding fixing elements 5a, 5b, independent of the number and types of interconnection elements, such as links, hinges etc., the desired effect will be obtained.

In an embodiment the seat 3 is hinged in pivots 6a, 6b of the ski binding fixing elements 5a, 5b, as illustrated in Fig. 3. The seat back may be fixed relative to the ski binding fixing elements 5a, 5b, as illustrated, or foldable relative the ski binding fixing elements 5a, 5b. In the latter case, a hinge can be used, as understood by a person skilled in the art.

In an alternative embodiment, the seat 3 is hinged in the seat back 2. In an embodiment the seat 3 extends backwards, past the seat back 2 to provide a support towards the skis behind the ski bindings 101a, 101b.

In an embodiment that can be combined with any of the embodiments above, the ski mountable and foldable child transportation device 1 comprises a transverse member 15 connected to the two ski binding fixing elements 5a, 5b, and configured to define the distance between the skis 100a, 100b. The transverse member 15 may be a rod fixed between the two ski binding fixing elements 5a, 5b.

However, independent of the type of transverse member 15, it should be arranged sufficiently high above the skis 100a, 100b, to ensure that it does not obstruct the snow between the tracks.

In a related embodiment, the transverse member 15 is integrated in the seat 3, e.g. as the frame of the seat 3.

The length of the transverse member 15 defines the distance between the skis, and is configured to follow normal prepared cross country tracks. The distance is maintained by the rigidity of the transverse member 15 and the structure of the seatback. This gives good control in good quality tracks, since the chair follows the tracks nicely. The balance is also good, since the issue of one ski in a track and one outside can be avoided.

In an embodiment illustrated in Fig. 3, the seat 3 has a frame extending along the front and the sides of the seat 2. This frame constitutes also the transverse member 15 connected to the two ski binding fixing elements 5a, 5b, which defines the distance between the skis 100a, 100b. The ski chair illustrated has a fixed distance between the skis to follow normal prepared cross country tracks. The fixed distance is maintained by the rigidity of the seat and back. This gives good control in good quality tracks, since the chair follows the tracks nicely. The balance is also good, since the issue of one ski in a track and one outside can be avoided.

Since cross country ski bindings only have a single point of fastening and a flexor in the front of the binding, the ski binding fixing elements 5a, 5b may rotate forward in the binding when experiencing a forward rotating force. This may become apparent especially when the seat back 2 is fixed relative the ski binding fixing elements 5a, 5b and the seat back 2 is pushed from behind.

In an embodiment, that can be related to any of the embodiments above, the transportation device 1 comprises seat locking means configured to lock the seat 3 relative the ski binding fixing elements 5a, 5b or the seat back 2. In a related embodiment the seat locking means are one or more releasable pins through the seat frame and the ski binding fixing elements 5a, 5b near the seat pivots 6a, 6b. In an alternative embodiment, the seat locking means is a self-locking ratcheting mechanism co-axial with the seat pivots 6a, 6b, or a similar self-locking mechanism.

In an embodiment that can be combined with any of the embodiments above, the transportation device 1 comprises ski-tip members 40a, 40b configured to be attached to respective ski-tips 102a, 102b of the two skis 100a, 100b and to provide a support in the longitudinal backward direction. A ski-tip member 40a, 40b may be a rod with a slit that can be pressed onto the ski tip. The length of the slit should be less than the width of the ski, so that the ski-tip member remains in a position on the tapered end of the ski-tip.

In an embodiment related to the above, the transportation device 1 comprises a fastening line 51a, 51b interconnecting and tensioning the ski-tip members 40a, 40b to the ski binding fixing elements 5a, 5b, and configured to prevent the ski-tip members 40a, 40b from falling off the ski tips 102a, 102b. In this case, the ski-tip members 40a, 40b have to be pressed onto the ski-tip 100a, 100b before the fastening line 51a, 51b is tensioned. There are several ways the fastening line 51a, 51b can be tensioned, as will be explained below.

The fastening line 51a, 51b should preferably be attached to the central portion of the transportation device 1. The transportation device 1 comprises in an embodiment related to the above rings or hooks 11a, 11b fixed relative the ski binding fixing elements 5a, 5b. The fastening line 51a, 51b runs from the ski tip members 40a, 40b through the respective ring or hook 11a, 11b. In related embodiments the ring or hook 11a, 11b could have been connected directly to other elements of the transportation device 1, e.g. the seat 3 or the support elements 30a, 30b, or even the ski bindings 101a, 101b.

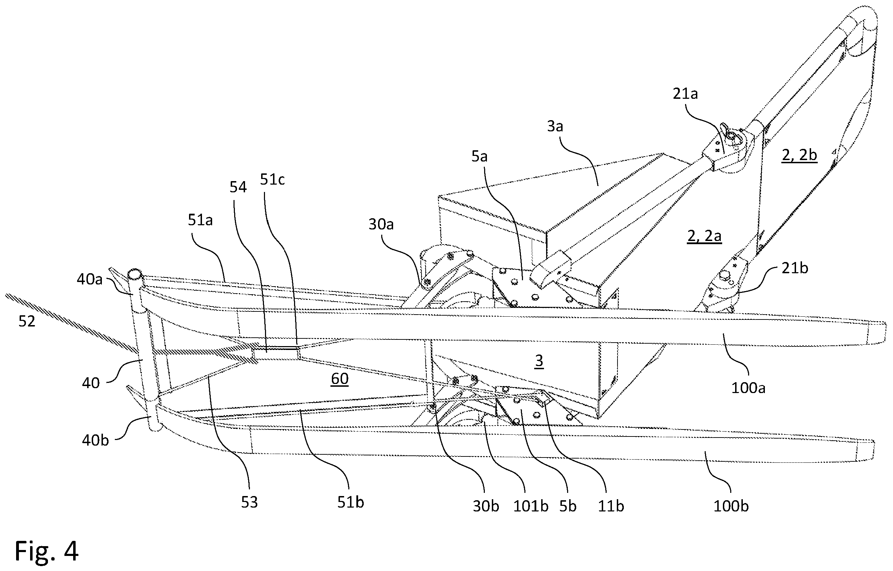

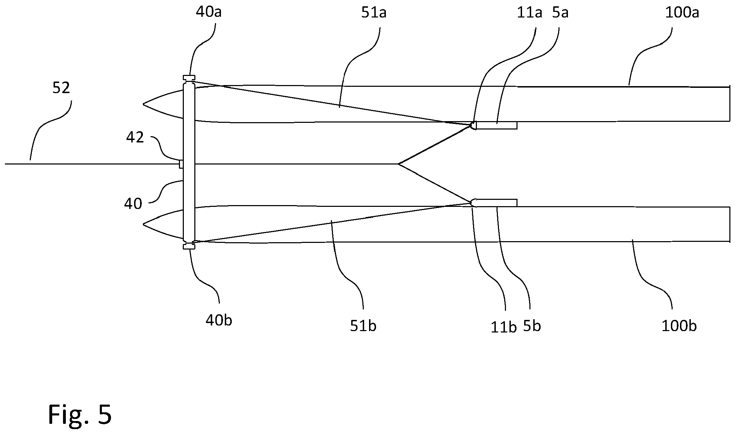

In an embodiment related to the above, the transportation device 1 comprises a pulling line 52 arranged for being pulled to move the transportation device 1. The pulling line 52 is illustrated in Fig. 4 and 5, and is typically pulled by another person in front of the transportation device 1.

In an embodiment related to the above, the fastening line 51a, 51b running from one ski tip members 40a, 40b to the other via the rings or hooks 11a, 11b, is a single line, and the pulling line 52 is attached to the middle of the fastening line 51a, 51b. The ski tip members 40a, 40b will then be tensioned towards the ski binding fixing elements 5a, 5b when the pulling line 52 is pulled forward.

In an embodiment related to the embodiments above with a single pulling line 52, the transportation device 1 comprises a ski tip member connector 40 interconnecting the ski tip members 40a, 40b, wherein the tip member connector 40 comprises a guide 41, radially securing the pulling line 52 to the ski tip member connector 40.

In an embodiment, alternative to the embodiments with a single pulling line, the transportation device 1 comprises two pulling lines 52a, 52b as illustrated e.g. in Fig. 5a, wherein the two pulling lines 52a, 52b are arranged for being pulled to move the transportation device 1, and wherein each of the pulling lines 52a, 52b are connected to the respective fastening line 51a, 51b.

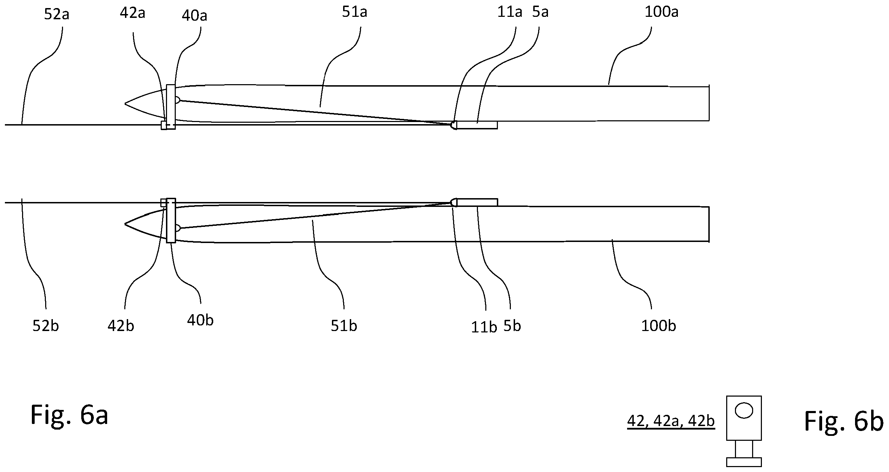

In this embodiment, as illustrated in Fig. 6 the pulling line 52a, 52b and the fastening line 51a, 51a may be implemented as two single lines performing the role as both pulling and fastening line. Each line then runs from one of the ski tip members 40a, 40b where it is secured in e.g. a securing member 43a, 43b through the respective rings or hooks 11a, 11b which are similar to the embodiment described above and back to the same ski tip member 40a, 40b. The ski tip members 40a, 40b may each comprise a guide 41a, 41b, e.g. a through hole, a ring or a hook, radially securing the pulling lines 52a, 52b to the ski tip members 40a, 40b. The ski tip members 40a, 40b will then be tensioned towards the one of the ski binding fixing elements 5a, 5b when the pulling lines 52a, 52b is pulled forward.

The transportation device 1 may also here comprise a ski tip member connector 40 similar to the one described for the embodiment above, but the guide is not necessary, since there is no pulling line in the middle. The ski tip member connector 40 could e.g. be a simple line to keep the ski-tips parallel in sharp turns.

For both embodiments, the ski-tip member connector may be integrated with the ski tip members 40a, 40b and it can be implemented in rigid or soft material, since the stability is handled by other elements, e.g. the seat and the back.

The transportation device 1 is pulled by use of one or more pulling lines 52, 52a, 52b, .e.g. ropes or bands, which are guided by the ski tip members 40a, 40b or the ski tip member connector 40, and attached to the two ski binding fixing elements 5a, 5b. This ensures that the majority of the pulling forces are acting at the bindings, and not pulling the ski tip members 40a, 40b off the ski tips.

The rope or band can also be replaced by rigid members attached to the two ski binding fixing elements 5a, 5b or the ski-tip members 40a, 40b. The rigid pulling devices can either be mounted to a belt person, or to another ski chair (or "pulk").

The ski tip members 40a, 40b should preferably be fixed, or pre-tensioned to the ski tips also when the transportation device 1 is at rest or not pulled, so that it does not fall of. Another reason for having the ski-tip members, is related to the tensioning of the foot rest explained below. However, it should still be possible to adjust the transportation device 1 to different ski lengths.

In one embodiment the transportation device 1 comprises a line lock 42 arranged to be adjustably fixed to the pulling line 52 and the ski tip member connector 40 such that the ski tip member 40 can be initially tensioned towards the ski binding fixing elements 5a, 5b. This is illustrated in Fig. 5.

In the case where two pulling lines are used, two line locks 42a, 42b can be arranged to be adjustably fixed to the pulling lines 52a, 52b and the ski tip members 40a, 40b such that the ski tip members 40a, 40b can be initially tensioned towards the ski binding fixing elements 5a, 5b This is illustrated in Fig. 6a.

The line lock 42, 42a, 42b may in both cases be any type of device that is able to secure the pulling lines 52, 52a, 52b relative to the ski tip members 40a, 40b or the ski tip member connector 40. An example is shown in Fig. 6b, which is a simple spring loaded press lock for a lace or line.

In an alternative embodiment, to the pre-tensioning embodiments above, and illustrated in Fig. 4, the transportation device 1 comprises an intermediate line 53, interconnecting the ski tip members 40a, 40b, and a ski length adjustment member 54 interconnecting the pulling line 52, the intermediate line 53 and the fastening line 51a, 51b. The length of the ski length adjustment member 54 is adjustable, such that the ski tip members 40a, 40b can be initially tensioned towards the ski binding fixing elements 5a, 5b for different ski-lengths.

In an embodiment that can be combined with any of the embodiments above having the fastening lines 51a, 51b the transportation device 11 comprises a foot rest 60 stretched out between the fastening lines 51a, 51b, as illustrated in Fig. 1 to 4.

According to an embodiment that can be combined with any of the embodiments above, the transportation device 1 comprises armrests 3a, 3b on each side, as illustrated in Fig. 4, to prevent the child's arms from falling down into the track. The arm rests will in an embodiment also be configured to be side stabilizers to improve the comfort.

The transportation device 1 can be made in any suitable material. In an embodiment, the seat and the seatback have a framework made of metal tubes. The framework can be covered with a fabric, such as canvas constituting the seat, seatback and the armrests. The ski binding fixing elements 5a, 5b, the support elements 30a, 30b and the pivots 21a, 21b may be made in metal or a combination of plastics and metal. The ski-tip members 40a, 40b may be made in e.g. fabric, plastics, metal or wood. At least some of these elements may in an embodiment be moulded. Instead of framework and canvas in the seat and the seatback, they could in an embodiment be entirely or partly in moulded plastics.

Other variations of the transportation device can also be made, typically without seat back, dedicated more to playing, luggage transport, or emergency transport of wounded people. Common would be a foldable device based mounted in bindings of existing skis without modification, with support member in front of binding, and a member between the ski-tips.

In the exemplary embodiments, various features and details are shown in combination. The fact that several features are described with respect to a particular example should not be construed as implying that those features by necessity have to be included together in all embodiments of the invention. Conversely, features that are described with reference to different embodiments should not be construed as mutually exclusive. As those with skill in the art will readily understand, embodiments that incorporate any subset of features described herein and that are not expressly interdependent have been contemplated by the inventor and are part of the intended disclosure. However, explicit description of all such embodiments would not contribute to the understanding of the principles of the invention, and consequently some permutations of features have been omitted for the sake of simplicity or brevity.

## Claims

1. A ski mountable and foldable child transportation device (1) comprising
- two ski binding fixing elements (5a, 5b), configured for being fixed to ski bindings (101a, 101b) arranged on respective two skis (100a, 100b),
- a seat back (2), and
- a seat (3),
wherein the two ski binding fixing elements (5a, 5b), the seat back (2) and the seat (3) are interconnected, and the seat back (2) and the seat (3) are foldable relative each other, wherein the seat (3) comprises two support elements (30a, 30b) in front of the two ski binding fixing elements (5a, 5b), and the support elements (30a, 30b) are configured to be arranged between the seat (3) and the respective two skies (100a, 100b) in front of the binding and before the start of the shovel, and to support the seat (3).

2. The ski mountable and foldable child transportation device (1) according to claim 1, wherein the two support elements (30a, 30b) are foldable relative the seat (3).

3. The ski mountable and foldable child transportation device (1) according to claim 1 or 2, wherein the seat back (2) comprises a first and a second section (2a, 2b), interconnected by a pivot (21a, 21b), wherein the second section (2b) is foldable over the first section (2a) about the pivot (21a, 21b).

4. The ski mountable and foldable child transportation device (1) according to claim 1, wherein the seat back (2) comprises first and second telescopic sections (2a, 2b).

5. The ski mountable and foldable child transportation device (1) according to any of the claims 1 to 3, wherein the seat back (2) comprises a handle (22).

6. The ski mountable and foldable child transportation device (1) according to any of the claims above, comprising a transverse member (15) connected to the two ski binding fixing elements (5a, 5b), and configured to define the distance between the skis (100a, 100b).

7. The ski mountable and foldable child transportation device (1) according to claim 6, wherein the transverse member (15) is integrated in the seat (3).

8. The ski mountable and foldable child transportation device (1) according to any of the claims above, comprising ski-tip members (40a, 40b) configured to be attached to respective ski-tips (102a, 102b) of the two skis (100a, 100b) and to provide a support for forces acting on the ski-tip members (40a, 40b) in the longitudinal backward direction.

9. The ski mountable and foldable child transportation device (1) according to claim 8, comprising a fastening line (51a, 51b) interconnecting and tensioning the ski-tip members (40a, 40b) to the ski binding fixing elements (5a, 5b), and configured to prevent the ski-tip members (40a, 40b) from falling off the ski tips (102a, 102b).

10. The ski mountable and foldable child transportation device (1) according to claim 9, wherein the ski mountable and foldable child transportation device (1) comprises;
- a pulling line (52) arranged for being pulled to move the transportation device (1), and
- rings or hooks (11a, 11b) fixed relative the ski binding fixing elements (5a, 5b), wherein the fastening line (51a, 51b) runs from the ski tip members (40a, 40b) through the respective ring or hook (11a, 11b) and further is connected to the pulling line (52) such that the ski tip members (40a, 40b) are tensioned towards the ski binding fixing elements (5a, 5b) when the pulling line (52) is pulled forward.

11. The ski mountable and foldable child transportation device (1) according to claim 10, comprising a ski tip member connector (40) interconnecting the ski tip members (40a, 40b), wherein the tip member connector (40) comprises a guide (41), radially securing the pulling line (52) to the ski tip member connector (40).

12. The ski mountable and foldable child transportation device (1) according to claim 10, comprising two pulling lines (52a, 52b) instead of the single pulling line (52), wherein the two pulling lines (52a, 52b) are arranged for being pulled to move the transportation device (1), and wherein each of the pulling lines (52a, 52b) are connected to the respective fastening line (51a, 51b), wherein the ski tip members (40a, 40b) each comprises a guide (41a, 41b), radially securing the pulling lines (52a, 52b) to the ski tip members (40a, 40b).

13. The ski mountable and foldable child transportation device (1) according to claim 11, comprising a line lock (42) arranged to be adjustably fixed to the pulling line (52) and the ski tip member connector (40) such that the ski tip member (40) can be initially tensioned towards the ski binding fixing elements (5a, 5b).

14. The ski mountable and foldable child transportation device (1) according to claim 12, comprising two line locks (42a, 42b) arranged to be adjustably fixed to the pulling lines (52a, 52b) and the ski tip members (40a, 40b) such that the ski tip members (40a, 40b) can be initially tensioned towards the ski binding fixing elements (5a, 5b).

15. The ski mountable and foldable child transportation device (1) according to claim 11, comprising
- an intermediate line (53), interconnecting the ski tip members (40a, 40b), and
- a ski length adjustment member (54) interconnecting the pulling line (52), the intermediate line (53) and the fastening line (51a, 51b), wherein the length of the ski length adjustment member (54) is adjustable, such that the ski tip members (40a, 40b) can be initially tensioned towards the ski binding fixing elements (5a, 5b).

16. The ski mountable and foldable child transportation device (1) according to any of the claims 9 to 15, comprising a foot rest (60) stretched out between the fastening lines (51a, 51b).

17. The ski mountable and foldable child transportation device (1) according to any of the claims above comprising armrests (3a, 3b) on each side.

## Patentansprüche

1. Kindertransportgerät (1) zum Zusammenklappen und auf Skier Anbringen, umfassend:
- zwei Skibindungsfixierelemente (5a, 5b), die dazu konfiguriert sind, an Skibindungen (101a, 101b) fixiert zu werden, die auf jeweiligen zwei Skiern (100a, 100b) angeordnet sind,
- eine Sitzlehne (2) und
- einen Sitz (3),
wobei die zwei Skibindungsfixierelemente (5a, 5b), die Sitzlehne (2) und der Sitz (3) miteinander verbunden sind und die Sitzlehne (2) und der Sitz (3) in Bezug aufeinander zusammenklappbar sind, wobei der Sitz (3) zwei Stützelemente (30a, 30b) vor den zwei Skibindungsfixierelementen (5a, 5b) umfasst und die Stützelemente (30a, 30b) dazu konfiguriert sind, zwischen dem Sitz (3) und den jeweiligen zwei Skiern (100a, 100b) vor der Bindung und vor dem Anfang der Schaufel angeordnet zu werden und den Sitz (3) zu unterstützen.

2. Kindertransportgerät (1) zum Zusammenklappen und auf Skier Anbringen nach Anspruch 1, wobei die zwei Stützelemente (30a, 30b) in Bezug auf den Sitz (3) zusammenklappbar sind.

3. Kindertransportgerät (1) zum Zusammenklappen und auf Skier Anbringen nach Anspruch 1 oder 2, wobei die Sitzlehne (2) einen ersten und einen zweiten Abschnitt (2a, 2b) umfasst, die durch einen Drehzapfen (21a, 21b) miteinander verbunden sind, wobei der zweite Abschnitt (2b) über dem ersten Abschnitt (2a) um den Drehzapfen (21a, 21b) zusammenklappbar ist.

4. Kindertransportgerät (1) zum Zusammenklappen und auf Skier Anbringen nach Anspruch 1, wobei die Sitzlehne (2) einen ersten und einen zweiten teleskopischen Abschnitt (2a, 2b) umfasst.

5. Kindertransportgerät (1) zum Zusammenklappen und auf Skier Anbringen nach einem der Ansprüche 1 bis 3, wobei die Sitzlehne (2) einen Griff (22) umfasst.

6. Kindertransportgerät (1) zum Zusammenklappen und auf Skier Anbringen nach einem der vorhergehenden Ansprüche, umfassend ein Transversalglied (15), das mit den zwei Skibindungsfixierelementen (5a, 5b) verbunden und dazu konfiguriert ist, den Abstand zwischen den Skiern (100a, 100b) zu definieren.

7. Kindertransportgerät (1) zum Zusammenklappen und auf Skier Anbringen nach Anspruch 6, wobei das Transversalglied (15) in den Sitz (3) eingebaut ist.

8. Kindertransportgerät (1) zum Zusammenklappen und auf Skier Anbringen nach einem der vorhergehenden Ansprüche, umfassend Skispitzenglieder (40a, 40b), die dazu konfiguriert sind, an jeweiligen Skispitzen (102a, 102b) der zwei Skier (100a, 100b) befestigt zu werden und eine Unterstützung für Kräfte bereitzustellen, die in der rückwärtigen Längsrichtung auf die Skispitzenglieder (40a, 40b) wirken.

9. Kindertransportgerät (1) zum Zusammenklappen und auf Skier Anbringen nach Anspruch 8, umfassend eine Befestigungsleine (51a, 51b), die die Skispitzenglieder (40a, 40b) mit den Skibindungsfixierelementen (5a, 5b) verbindet und spannt und dazu konfiguriert ist, die Skispitzenglieder (40a, 40b) daran zu hindern, von den Skispitzen (102a, 102b) abzufallen.

10. Kindertransportgerät (1) zum Zusammenklappen und auf Skier Anbringen nach Anspruch 9, wobei das Kindertransportgerät (1) zum Zusammenklappen und auf Skier Anbringen (1) Folgendes umfasst:
- eine Zugleine (52), die dazu angeordnet ist, gezogen zu werden, um das Transportgerät (1) zu bewegen, und
- Ösen oder Haken (11a, 11b), die in Bezug auf die Skibindungsfixierelemente (5a, 5b) fixiert sind, wobei die Befestigungsleine (51a, 51b) von den Skispitzengliedern (40a, 40b) durch die jeweilige Öse oder den jeweiligen Haken (11a, 11b) verläuft und ferner derart mit der Zugleine (52) verbunden ist, dass die Skispitzenglieder (40a, 40b) in Richtung der Skibindungsfixierelemente (5a, 5b) gespannt werden, wenn die Zugleine (52) nach vorne gezogen wird.

11. Kindertransportgerät (1) zum Zusammenklappen und auf Skier Anbringen nach Anspruch 10, umfassend einen Skispitzengliedverbinder (40), der die Skispitzenglieder (40a, 40b) miteinander verbindet, wobei der Spitzengliedverbinder (40) eine Führung (41) umfasst, die die Zugleine (52) radial an dem Skispitzengliedverbinder (40) festmacht.

12. Kindertransportgerät (1) zum Zusammenklappen und auf Skier Anbringen nach Anspruch 10, umfassend zwei Zugleinen (52a, 52b) anstelle der einfachen Zugleine (52), wobei die zwei Zugleinen (52a, 52b) dazu angeordnet sind, gezogen zu werden, um das Transportgerät (1) zu bewegen, und wobei jede der Zugleinen (52a, 52b) mit der jeweiligen Befestigungsleine (51a, 51b) verbunden ist, wobei jedes der Skispitzenglieder (40a, 40b) eine Führung (41a, 41b) umfasst, die die Zugleinen (52a, 52b) radial an den Skispitzengliedern (40a, 40b) festmacht.

13. Kindertransportgerät (1) zum Zusammenklappen und auf Skier Anbringen nach Anspruch 11, umfassend eine Leinenverriegelung (42), die dazu angeordnet ist, anpassbar an der Zugleine (52) und dem Skispitzengliedverbinder (40) derart fixiert zu werden, dass das Skispitzenglied (40) anfänglich in Richtung der Skibindungsfixierelemente (5a, 5b) gespannt werden kann.

14. Kindertransportgerät (1) zum Zusammenklappen und auf Skier Anbringen nach Anspruch 12, umfassend zwei Leinenverriegelungen (42a, 42b), die dazu angeordnet sind, anpassbar an den Zugleinen (52a, 52b) und den Skispitzengliedern (40a, 40b) derart fixiert zu werden, dass die Skispitzenglieder (40a, 40b) anfänglich in Richtung der Skibindungsfixierelemente (5a, 5b) gespannt werden können.

15. Kindertransportgerät (1) zum Zusammenklappen und auf Skier Anbringen nach Anspruch 11, umfassend:
- eine Zwischenleine (53), die die Skispitzenglieder (40a, 40b) miteinander verbindet, und
- ein Skilängenanpassungsglied (54), das die Zugleine (52), die Zwischenleine (53) und die Befestigungsleine (51a, 51b) miteinander verbindet, wobei die Länge des Skilängenanpassungsglieds (54) derart anpassbar ist, dass die Skispitzenglieder (40a, 40b) anfänglich in Richtung der Skibindungsfixierelemente (5a, 5b) gespannt werden können.

16. Kindertransportgerät (1) zum Zusammenklappen und auf Skier Anbringen nach einem der Ansprüche 9 bis 15, umfassend eine Fußablage (60), die sich zwischen den Befestigungsleine n (51a, 51b) erstreckt.

17. Kindertransportgerät (1) zum Zusammenklappen und auf Skier Anbringen nach einem der vorhergehenden Ansprüche, umfassend Armablagen (3a, 3b) auf jeder Seite.

## Revendications

1. Dispositif de transport pour enfant pliable et pouvant être monté sur des skis (1), comprenant
- deux éléments d'attache de fixation de ski (5a, 5b), configurés pour être attachés à des fixations de ski (101a, 101b) disposées sur les deux skis respectifs (100a, 100b),
- un dossier de siège (2), et
- un siège (3),
dans lequel les deux éléments d'attache de fixation de ski (5a, 5b), le dossier de siège (2) et le siège (3) sont interconnectés, et le dossier de siège (2) et le siège (3) sont pliables l'un par rapport à l'autre, dans lequel le siège (3) comprend deux éléments de support (30a, 30b) devant les deux éléments d'attache de fixation de ski (5a, 5b), et les éléments de support (30a, 30b) sont configurés pour être disposés entre le siège (3) et les deux skis respectifs (100a, 100b) devant la fixation et avant le départ de la pelle, et pour supporter le siège (3).

2. Dispositif de transport pour enfant pliable et pouvant être monté sur des skis (1) selon la revendication 1, dans lequel les deux éléments de support (30a, 30b) sont pliables par rapport au siège (3).

3. Dispositif de transport pour enfant pliable et pouvant être monté sur des skis (1) selon la revendication 1 ou 2, dans lequel le dossier de siège (2) comprend une première et une seconde sections (2a, 2b), reliées entre elles par un pivot (21a, 21b), dans lequel la seconde section (2b) est pliable sur la première section (2a) autour du pivot (21a, 21b).

4. Dispositif de transport pour enfant pliable et pouvant être monté sur des skis (1) selon la revendication 1, dans lequel le dossier de siège (2) comprend des première et seconde sections télescopiques (2a, 2b).

5. Dispositif de transport pour enfant pliable et pouvant être monté sur des skis (1) selon l'une quelconque des revendications 1 à 3, dans lequel le dossier de siège (2) comprend une poignée (22) .

6. Dispositif de transport pour enfant pliable et pouvant être monté sur des skis (1) selon l'une quelconque des revendications ci-dessus, comprenant un élément transversal (15) relié aux deux éléments d'attache de fixation de ski (5a, 5b), et configuré pour définir la distance entre les skis (100a, 100b).

7. Dispositif de transport pour enfant pliable et pouvant être monté sur des skis (1) selon la revendication 6, dans lequel l'élément transversal (15) est intégré dans le siège (3).

8. Dispositif de transport pour enfant pliable et pouvant être monté sur des skis (1) selon l'une quelconque des revendications ci-dessus, comprenant des éléments de pointe de ski (40a, 40b) configurés pour être fixés aux pointes de ski respectives (102a, 102b) des deux skis (100a, 100b) et pour fournir un support aux forces agissant sur les éléments de pointe de ski (40a, 40b) dans la direction longitudinale vers l'arrière.

9. Dispositif de transport pour enfant pliable et pouvant être monté sur des skis (1) selon la revendication 8, comprenant une ligne de fixation (51a, 51b) interconnectant et tendant les éléments de pointe de ski (40a, 40b) aux éléments d'attache de fixation de ski (5a, 5b), et configurée pour empêcher les éléments de pointe de ski (40a, 40b) de tomber des pointes de ski (102a, 102b).

10. Dispositif de transport pour enfant pliable et pouvant être monté sur des skis (1) selon la revendication 9, dans lequel le dispositif de transport pour enfant pliable et pouvant être monté sur des skis (1) comprend :
- une ligne de traction (52) agencée pour être tirée pour déplacer le dispositif de transport (1), et
- des anneaux ou crochets (11a, 11b) attachés par rapport aux éléments d'attache de fixation de ski (5a, 5b), dans lequel la ligne de fixation (51a, 51b) s'étend depuis les éléments de pointe de ski (40a, 40b) en passant par l'anneau ou le crochet respectif (11a , 11b) et est en outre reliée à la ligne de traction (52) de sorte que les éléments de pointe de ski (40a, 40b) sont tendus vers les éléments d'attache de fixation de ski (5a, 5b) lorsque la ligne de traction (52) est tirée vers l'avant.

11. Dispositif de transport pour enfant pliable et pouvant être monté sur des skis (1) selon la revendication 10, comprenant un connecteur d'élément de pointe de ski (40) interconnectant les éléments de pointe de ski (40a, 40b), dans lequel le connecteur d'élément de pointe (40) comprend un guide (41), fixant radialement la ligne de traction (52) au connecteur d'élément de pointe de ski (40).

12. Dispositif de transport pour enfant pliable et pouvant être monté sur des skis (1) selon la revendication 10, comprenant deux lignes de traction (52a, 52b) au lieu de la ligne de traction unique (52), dans lequel les deux lignes de traction (52a, 52b) sont agencées pour être tirées pour déplacer le dispositif de transport (1), et dans lequel chacune des lignes de traction (52a, 52b) est reliée à la ligne de fixation respective (51a, 51b), dans lequel les éléments de pointe de ski (40a, 40b) comprennent chacun un guide (41a, 41b), fixant radialement les lignes de traction (52a, 52b) aux éléments de pointe de ski (40a, 40b).

13. Dispositif de transport pour enfant pliable et pouvant être monté sur des skis (1) selon la revendication 11, comprenant un verrou de ligne (42) agencé pour être fixé de manière réglable à la ligne de traction (52) et au connecteur d'élément de pointe de ski (40) de sorte que l'élément de pointe de ski (40) peut être initialement tendu vers les éléments d'attache de fixation de ski (5a, 5b).

14. Dispositif de transport pour enfant pliable et pouvant être monté sur des skis (1) selon la revendication 12, comprenant deux verrous de ligne (42a, 42b) agencés pour être fixés de manière réglable aux lignes de traction (52a, 52b) et aux éléments de pointe de ski (40a, 40b) de sorte que les éléments de pointe de ski (40a, 40b) peuvent être initialement tendus vers les éléments d'attache de fixation de ski (5a, 5b).

15. Dispositif de transport pour enfant pliable et pouvant être monté sur des skis (1) selon la revendication 11, comprenant
- une ligne intermédiaire (53), reliant les éléments de pointe de ski (40a, 40b), et
- un élément de réglage de la longueur des skis (54) reliant la ligne de traction (52), la ligne intermédiaire (53) et la ligne de fixation (51a, 51b), dans lequel la longueur de l'élément de réglage de la longueur des skis (54) est réglable, de sorte que les éléments de pointe de ski (40a, 40b) peuvent être initialement tendus vers les éléments d'attache de fixation de ski (5a, 5b).

16. Dispositif de transport pour enfant pliable et pouvant être monté sur des skis (1) selon l'une quelconque des revendications 9 à 15, comprenant un repose-pied (60) étendu entre les lignes de fixation (51a, 51b).

17. Dispositif de transport pour enfant pliable et pouvant être monté sur des skis (1) selon l'une quelconque des revendications ci-dessus, comprenant des accoudoirs (3a, 3b) de chaque côté.
